# EUROPEAN PATENT APPLICATION

(11) **EP 1 820 559 A1**
(43) Date of publication of application: **22.08.2007**
(21) Application number: 07002852.7
(22) Date of filing: 09.02.2007
(51) Int. Cl.: B01D 53/22, B01D 63/02, C01B 13/02

(54) **An apparatus for separating elements in the air**

(30) Priority: 09.02.2006 JP 2006063337
(71) Applicant: Sataco Co., LTD., Tokyo (JP)
(72) Inventor: Aonuma, Saburo, Tokyo (JP)
(74) Representative: Wagner, Karl H.

(57) **Abstract**

An air elements separating apparatus having a plurality of hollow-fibers for separating nitrogen containing gas and oxygen containing gas having a flexible structure, and an outer sleeve having a flexible structure for covering the plurality of the hollow-fibers member and an opening for releasing the oxygen containing gas separated by the plurality of the hollow-fibers member wherein
the plurality of the hollow-fibers member and the outer sleeve member are kept airtight, and the opening is formed in the vicinity of the compressed air intake end.
wherein the plurality of hollow-fibers member is made of a resin having a flexible property such as polysulfone or polyimide, and the outer sleeve member is made any one of a metal formed in bellows, resin, rubber or fabric.

## Description

This application is based on the priority document of Japanese Patent Application No.2006-63337 filed on February 9, 2006, and claims the benefits of priority thereof. The entire contents of the priority document are incorporated herein referring to the priority document.

### BACKGROUND OF THE INVENTION

This invention relates to an apparatus for separating elements in the air having A flexible structure members (hereinafter an air elements separating apparatus).

A nitrogen separating apparatus has a structure using a hollow-fiber made of a resin for separating oxygen and nitrogen in the air. The air elements separating apparatus made of a resin material is already known and widely and generally used, particularly for separating nitrogen in the air for use in a welding operation instead of using a nitrogen cylinder. Nitrogen is used for anti-oxidizing agent, explosion-proof agent or storing produces.

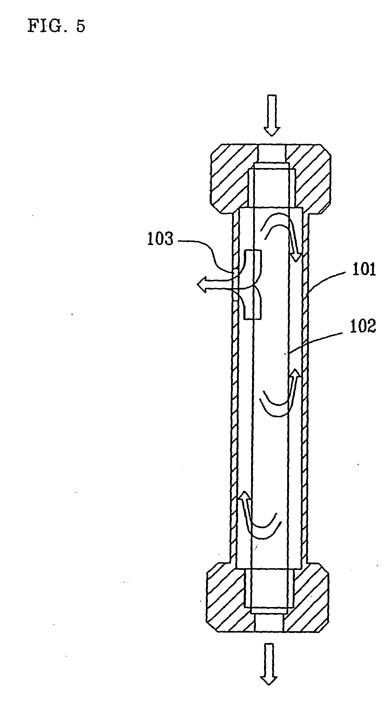

FIG. 5 is a sectional view showing a conventional air elements (nitrogen) separating module generally known having a,case 101 made of a resin or a metal, and an airtight terminal structure at upper and lower ends. A hollow-fiber membrane_body 102 is stored in the case 101. Compressed air is then infused from the upper end of the case in FIG. 5, and nitrogen gas is extracted from the lower end of the case. An exhaust hole 103 is provided for releasing oxygen gas separated during the filtration by the hollow-fiber membrane. Other prior arts searched by the present inventor are: Japanese Publication JP 2002-263454 published on Sept. 17, 2002 and United States Patent US 6,776,820 issued on Aug. 17, 2004.

### SUMMARY OF THE INVENTION

In the conventional air elements separating apparatus uses polyimide for the hollow-fiber made of a resin having specified dimensions. However, due to its solid structure, the conventional air elements separating apparatus has disadvantage of lacking flexibility during installation and transportation.
It is the object of the present invention to provide an apparatus for separating elements in the air having a flexible structure so that the apparatus can be made smaller, and flexibly adjusted for transportation and installation.

An air elements separating apparatus having a plurality of hollow-fibers for separating nitrogen containing gas and oxygen containing gas having a flexible structure, and an outer sleeve member having a flexible structure for covering the plurality of the hollow-fibers member and an opening for releasing the oxygen containing gas separated by the plurality of the hollow-fibers member.

The plurality of the hollow-fibers member and the outer sleeve member are kept airtight, and the opening is formed in the vicinity of the compressed air intake end.

Outer part of the plurality of the hollow-fibers member is kept airtight by forming oxygen containing gas flows in the direction from the nitrogen gas outlet end toward the compressed air intake end through a space between the plurality of hollow-fibers member and the outer sleeve member by fastening at least the plurality of hollow-fibers member and the outer sleeve member at the end of the nitrogen gas outlet end.

The plurality of the hollow-fibers member is made of a resin having a flexible property such as polysulfone or polyimide.

The outer sleeve member is made of any one of a metal formed in bellows, resin, rubber or fabric.

The outer sleeve member is made of a resin film made of polypropylene (PP) or polyethylene (PE) in the form of a resin film.

A housing for storing the plurality of the hollow-fibers member and the outer sleeve member therein having an intake port for taking the compressed air, one end of the plurality of the hollow-fibers member and the outer sleeve member are fastened together or left open, and the other end connected to an outlet port for taking out the nitrogen containing gas, the housing has an exhaust gas outlet for releasing oxygen containing gas out of the housing discharged from the exhaust gas outlet.

According to the present invention, the plurality of the hollow-fibers member and the outer sleeve member have flexible function so that the apparatus can be flexibly deformed, length of the apparatus can be adjusted at any length, the apparatus can be made smaller and flexibly used depending on installation site and transportation means.

### BRIEF DESCRIPTION OF THE DRAWINGS

FIG. 1 is a sectional view showing a first embodiment of an air elements separating apparatus having flexible structure of the present invention having oxygen discharge holes in the vicinity of the compressed air intake end of an outer sleeve.
FIG. 2 is a sectional view showing a second embodiment of the air elements separating apparatus of the present invention having an open-end for releasing oxygen from an outer sleeve.
FIG. 3A is a plan view showing a third embodiment of the air elements separating apparatus having hardware ports (receptacles) in the housing of the present invention.
FIG. 3B is a sectional view at a break line A - A in FIG. 3A showing a third embodiment of the air elements separating apparatus of the present invention.
FIG. 3C is a partial sectional side-view showing a third embodiment a connection hole, a passage, and an oxygen discharge hole in the housing of the present invention.
FIG. 4 is a plan view showing an exterior of packing form of an air elements separating apparatus having a flexible structure of the present invention.
FIG. 5 is a sectional view showing a conventional air elements (nitrogen) separating module.

### A PREFERRED EMBODIMENT OF THE INVENTION

An embodiment of the present invention is described in details hereunder by referring to the drawings. The present invention relates to the air elements separating apparatus for separating nitrogen in the air by using the hollow-fibers made of a resin. A membrane separation method using hollow-fibers made of a resin uses a method for separating elements based on differences of penetration speed through the membrane.
The air elements separating apparatus therefore has a simple structure for faster initialization, and suitable for smaller manufacturing operation.

The above and other objects, features and advantages of this invention and the manner of attaining them will become more apparent, and the invention itself will best be understood, from a study of the following description of a preferred embodiments illustrated in the attached drawings.

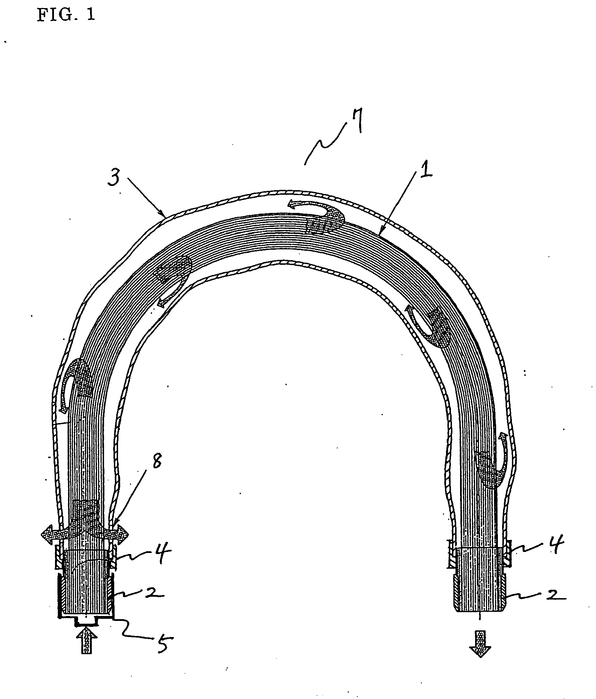

FIG. 1 is a sectional view showing the flexible air elements separating apparatus according to the present invention wherein a hollow-fiber membrane (a plurality of hollow fibers member) made of a high polymer has a property that oxygen, hydrogen and water can penetrate easier than nitrogen in the air.
Compressed air is supplied into the hollow-fiber membrane (a plurality of hollow-fibers member), oxygen is separated and nitrogen is extracted having a separation speed lower than oxygen such that differences of penetration speed of elements in the air are used.
An internal diameter of the hollow-fiber is smaller than 0.2mm and tens of thousands of the hollow-fibers are bound to constitute a membrane module.

Polysulfone is characterized by its softness of property for easy processing characteristics and low cost availability and small age deterioration, and having air elements separation performance of 99.90%. However, polyimide may be used, if the polyimide material has a flexible character.

### [First Embodiment]

As FIG. 1 shows, according to the air elements separating apparatus of the present invention, a plurality of hollow-fibers member 1 has a flexible property, and outer sleeve tube member 3 having a flexible property, and oxygen exhaust outlet holes 8 in the vicinity of the compressed air intake end for releasing oxygen separated, end-caps 2 attached at both ends of the outer sleeve 3 for holding the outer sleeve member 3 and the plurality of hollow-fibers member 1 therein, the holders 5 is attached on the end-caps 2, and a seal 4 (adhesive tape or a bonding agent) for fastening the outer sleeve member 3 with the end caps 2 at the nitrogen outlet end for keeping the nitrogen outlet end of the outer sleeve member 3 airtight.

Polysulfone is used for the hollow-fibers member 1 to provide thereof with flexibility. The outer sleeve member 3 is made of a metal having bellows, a resin such as polypropylene (PP) or polyethylene (PE), rubber or fabric, any one of such material having airtight property. If the outer sleeve member 3 is made of a metal, bellows have to be formed for providing flexibility. If the outer sleeve member 3 is made of a fabric, resin or rubber layer have to be coated for providing an air shielding function.

In the present embodiment, a plurality of hollow-fibers 1 to constitute a membrane having a plurality of more than a thousand hollow-fibers, each of the hollow-fiber has the length of 1800mm made of polysulfone resin is used. (However, the hollow-fiber membrane 1 may have less than a thousand hollow fibers.)
Thickness of the hollow-fiber member 1 to constitute a membrane is 200 µ m, and external diameter is 500 µ m. If a material is flexible, polyimide may be used for the hollow-fiber to constitute a membrane.
First, a plurality of hollow-fibers member 1 is inserted in the outer sleeve member 3 made of polypropylene (PP) having 22 mm diameter by providing the oxygen gas outlet holes 8 as openings in the vicinity of the compressed air intake end.
The holders 5 made of polypropylene (PP) having the length of 25mm and external diameter 22mm is attached to the end caps 2 made of polypropylene (PP) for binding both ends of the plurality of the hollow-fibers exposed from the both ends of the outer sleeve member 3 thereby connecting the both ends of the outer sleeves 3 by fitting it into the holders 5.
The connecting portion between the outer sleeve member 3 and the end-cap 2 as well as the holder 5 at the nitrogen outlet end is sealed by winding the seal 4 made of urethane or rubber or using a bonding agent.

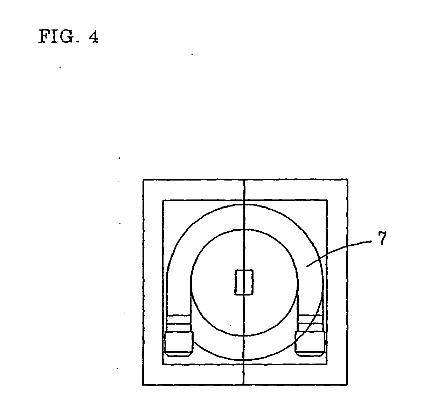

FIG. 4 is a plan view showing an exterior of packing form according to the present invention, the air elements separating apparatus 7 can be bent having a round diameter of 320mm in a cardboard carton box for shipment.
According to the air elements separating apparatus 7 of the present embodiment, the nitrogen outlet of the outer sleeve 3 having flexible function can be placed at a suitable location close to operation.

The present inventor resulted concentration of nitrogen between 95.00% - 99.90% having a low dew point of -11° C of the gas dew point in the ambience when the compressed air is supplied into the air elements separating apparatus 7 of the present embodiment. The compressed air supplied after drain and mist are removed under the condition of 0.5 MPa, 20° C at a flow rate of 0.5Nm3/hr.
The generation amount of nitrogen gas and concentration depend on supply pressure and temperature of the compressed air. Generation of nitrogen increases as the pressure of the compressed air increases higher, and as the temperature of the ambience increases while concentration is kept constant.

### [Second Embodiment]

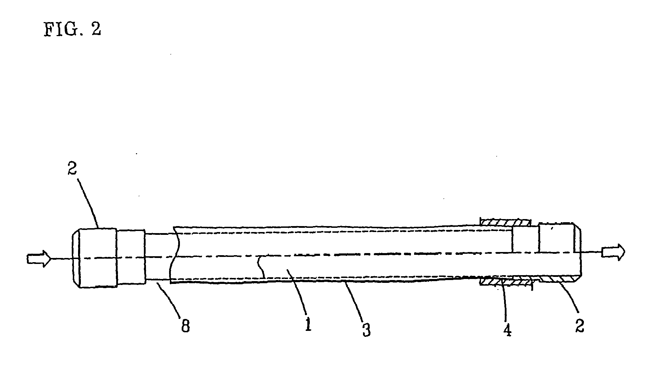

In the first embodiment, the air elements separating apparatus 7, the plurality of hollow-fibers member 1 having flexible property is covered by the outer sleeve member 3, the end of the outer sleeve member 3 is fixed by the end-cap 2 at the end of compressed air intake end, and the oxygen gas outlet opening 8 is provided in the vicinity of the compressed air intake end of the outer sleeve 3. The structure is however not limited to this structure.
As FIG.2 shows, only a difference from the first embodiment is that one of the end of the outer sleeve member 3 is not necessarily fastened by the seal 4 (an adhesive tape or a bonding agent) with end-cap 2 and at the end of the compressed air intake end for covering the plurality of the hollow-fibers member 1 so that when the plurality of the hollow-fibers member 1 and the outer sleeve member 3 is deformed by bending thereof, the outer sleeve member 3 freely slides off the end-cap 2 so that an opening 8 is provided between the end-cap 2 and the outer sleeve member 3 in the vicinity of the compressed air intake end.
By this structure, dimension can be adjusted in the lengthwise direction easily when the plurality of the hollow-fibers member 1 and the outer sleeve member 3 are deformed in an optional direction while air containing gas flows off through a space between the plurality of the hollow-fibers member 1 and the outer sleeve member 3 from the nitrogen gas outlet end where the outer sleeve member 3 fastened by the end-cap 2 by the seal 4 in the direction toward the compressed air intake end where the opening 8 is provided. By this structure, the plurality of the hollow-fibers member 1 can be kept airtight while the external area thereof is protected from drying.

### [Third Embodiment]

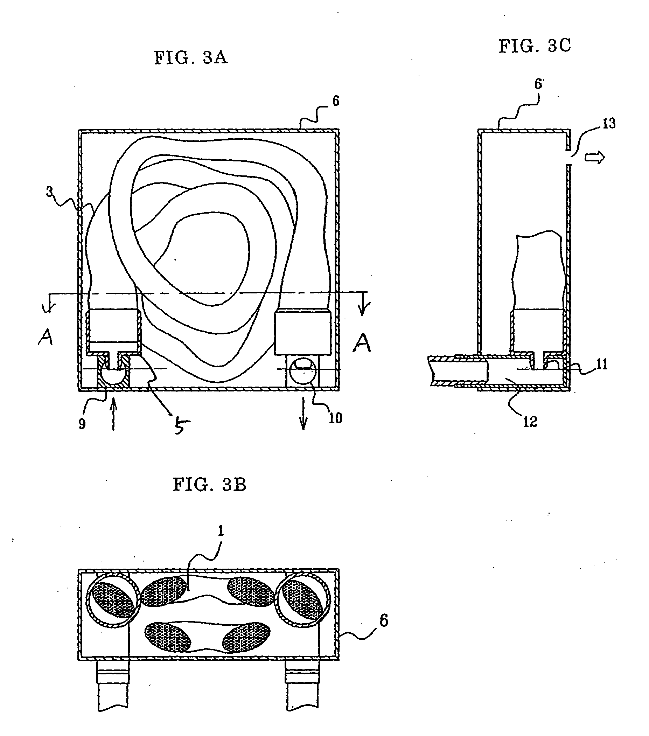

FIG. 3A is a plan view showing a third embodiment of the air elements separating apparatus having a compressed air intake hardware port 9 and a nitrogen outlet hardware port 10 (or receptacles made of metals) 9, 10 for attaching the holders 5 to the internal housing 6 of the present invention.
FIG. 3B is a sectional view at a break line A - A in FIG. 3A showing a third embodiment of the air elements separating apparatus of the present invention.
FIG. 3C is a partial sectional side-view showing a third embodiment a connection hole 11, a passage 12, and an oxygen release hole 13 in the housing of the present invention.
As FIG. 3A through 3C show, according to this embodiment, only the difference from the embodiment 1 is the plurality of hollow-fibers member 1 covered by the outer sleeve member 3 and fastened by the holder 5 is stored in a housing 6. The housing 6 has installed a compressed air intake hardware port (receptacle) 9 and nitrogen outlet hardware port (receptacle) 10 for holding the holders 5 therein.
The housing 6 storing therein the plurality of hollow-fibers member 1 covered by the outer sleeve member 3 and fastened by the holder 5. The end of the compressed air intake end, the holder 5 is fit into a hole 11, and a passage 12 for connecting between the compressed air intake hardware port 9 and the holder 5 in the vicinity of the end of compressed air intake end. The other holder 5 at the end of nitrogen outlet end is fit into the other hole 11, and the other passage 12 for connecting between the nitrogen outlet hardware port 10 and the holder 5 at the nitrogen outlet end, and an oxygen outlet hole 13 for releasing separated oxygen and the other elements out of the housing 6.
All other description in the embodiment 2 is omitted to eliminate duplication because only the difference between the embodiment 1 and the embodiment 2 is whether or not the air elements separating apparatus is stored in the housing 6. The embodiment 2 is suitably used for an operation
where nitrogen is used at a fixed location.

Although the concentration of nitrogen gas is approximately 99.90% resulting from the air elements separating apparatus 7 of this invention, the dimensions of the apparatus can be kept smaller by the simple structure having the plurality of the hollow-fibers member 1, the end-caps 2, the outer sleeve member 3, the seal 4 and the holders 5.
The air elements separating apparatus 7 is free of trouble because of the absence of troublesome portions or consumable parts thereby providing maintenance-free apparatus.
According to the present invention, the plurality of the hollow-fibers member separates the air elements so that time is short for initiating to reach at a specified concentration, highly purified nitrogen gas can be simply obtained by connecting the separating apparatus to a high compressed air supply.

According to the above embodiments, an example is described as the air elements separating apparatus 7 using difference of penetration speeds of elements in the air such that separating nitrogen gas having a slow separation speed out of the air by separating oxygen. However, oxygen extracted from the opening of the outer sleeve member 3 of the air elements separating apparatus 7 can also be used efficiently.

While the present invention is described in terms of preferred embodiments, however the above embodiments describe examples of the invention, and therefore many modifications, and variations are possible in light of the above teachings and within the scope of the appended claims without departing from the spirit and intended scope of the invention.

## Claims

1. An air elements separating apparatus comprising:
a plurality of hollow-fibers member for separating nitrogen containing gas and oxygen containing gas having a flexible structure, and
an outer sleeve member having a flexible structure for covering said plurality of the hollow-fibers member and an opening for releasing the oxygen containing gas separated by said plurality of the hollow-fibers member.

2. The air elements separating apparatus of claim 1, wherein
said plurality of the hollow-fibers member and said outer sleeve member are kept airtight, and said opening is formed in the vicinity of said compressed air intake end.

3. The air elements separating apparatus of claim 2, wherein external said plurality of the hollow-fibers member is kept airtight by forming oxygen containing gas flows in the direction toward said compressed air intake end from said nitrogen gas outlet end through a space between said plurality of hollow-fibers member and the outer sleeve member by fastening at least said plurality of hollow fibers member and said outer sleeve member at the end of said nitrogen gas outlet end.

4. The air elements separating apparatus of any one of claims 1 through 3, wherein
said plurality of hollow-fibers member is made of a resin having a flexible property such as polysulfone or polyimide.

5. The air elements separating apparatus of any one of claims 1 through 4, wherein
said outer sleeve member is made any one of a metal formed in bellows, resin, rubber or fabric.

6. The air elements separating apparatus of claim 5, wherein
said outer sleeve member is made of a resin film made of polypropylene (PP) or polyethylene (PE) in the form of a resin film.

7. The air elements separating apparatus of any one of claims 1 through 6, wherein
a housing for storing said plurality of the hollow-fibers member and said outer sleeve member therein having an intake port for taking said compressed air,
one end of said plurality of hollow-fibers member and said outer sleeve member are fastened together or left open, and the other end connected to an outlet port for taking out said nitrogen containing gas,
said housing has an exhaust gas outlet hole for releasing oxygen containing gas exhausted from said exhaust gas outlet hole out of said housing.
